# EUROPEAN PATENT SPECIFICATION

(11) **EP 1 283 116 B1**
(45) Date of publication and mention of the grant of the patent: **26.05.2004**
(21) Application number: 02015404.3
(22) Date of filing: 11.07.2002
(51) Int. Cl.: B60C 27/04

(54) **Antiskid device for vehicle wheels**
Gleitschutzvorrichtung für Kraftfahrzeugreifen
Dispositif anti patinage pour roues de véhicules

(30) Priority: 07.08.2001 IT TO20010796
(43) Date of publication of application: 12.02.2003
(62) Divisional of application: 02028180.4
(73) Proprietor: Groppo, Andrea, 12040 Ceresole d'Alba (CN) (IT); Groppo, Lazzaro, 12040 Racconigi, (Cuneo) (IT)
(72) Inventor: Groppo, Andrea, 12040 Ceresole d'Alba (CN) (IT); Groppo, Lazzaro, 12040 Racconigi, (Cuneo) (IT)
(74) Representative: Robba, Pierpaolo

(56) References cited:
- EP-A- 0 397 067
- FR-A- 2 626 219

## Description

The object of the present invention is an antiskid device for vehicle wheels of the type suitable to be used particularly in presence of snow and/or ice for increasing the grip of the tire against the surface covered by the wheel during the vehicle ride.

According to their assembly system, the currently known antiskid devices can be subdivided into antiskid devices without parts permanently connected to the vehicle wheel and antiskid devices with parts permanently connected to the vehicle wheel.

The first group of antiskid devices generally comprises the snow chains that are integrally mounted when necessary, that is when conditions of roadbed covered in snow or ice occur on the vehicle wheel.

Therefore the devices of this group are provided with means for the direct fixing to the vehicle wheel.

On the contrary, the second group of antiskid devices comprises devices separated in two or more parts, at least one of which being fixed to the vehicle wheel in a permanent way, for instance when the winter season begins, in order to allow a more rapid assembly of the remaining parts.

The present invention concerns said second type of antiskid devices.

A device of this type is described for instance in the document EP 0 397 067.

However, a disadvantage of the known devices is due to the impossibility of adjusting the radial opening of the arms so that it is consequently necessary to produce a high number of different sizes for the different types of wheels and tires on the market.

An attempt of solving the above mentioned problem is described for instance in the document EP 0 987 127.

However, the solution described in this latter document allows a limited adjustment of the radial opening of the arms of the device and therefore solves the problem only partially.

FR 2 626 219 discloses an antiskid device in which the arms can slide radially with respect to the vehicle wheel and where elastic means are provided for maintaining said arms against the tire tread.

Therefore a first object of the present invention is to provide an appropriate solution to the problem of how to avoid the construction of antiskid devices of the above mentioned type having different sizes, in order to adapt said devices to all the wheels and the tires under production.

A disadvantage of the devices of the above mentioned type derives from the dimensions of the device. In fact, contrary to the devices of the first group which are generally foldable, the dimensions of the devices of the second group can not be reduced and this causes an increase of the transport and storage costs.

Therefore a second object of the present invention is that of getting round the known disadvantages by providing an antiskid device of the above mentioned second group that can be adapted to a vast range of sizes of vehicle wheels and tires.

This and other objects are obtained by means of the device according to the invention as characterised in claim 1.

A further problem that can be met in the antiskid devices of the second type derives from the need of allowing a rapid assembly and disassembly of the device with respect to the part that remains permanently fixed to the vehicle wheel.

In order to solve the problem of how to fix the two parts of the devices in a rapid way, various solutions have been proposed in the past.

One of this examples is described in the European patent application 0 464 319.

According to the teaching of the above mentioned patent application, the device is equipped with a coupling allowing the reciprocal engagement of teeth provided on the two parts. A snap rotating element allows to block the reciprocal movement between the two parts and, consequently, to avoid the disengagement between the teeth.

However, the described system turns out to be complex and therefore its production is expensive.

Therefore a further object of the present invention is that of providing an antiskid device provided with economical and reliable means for allowing a rapid assembly and disassembly.

The above mentioned and other objects of the invention will appear more clear from the description of a preferred embodiment with reference to the hereby attached drawings, wherein:
- Figure 1a is a section along a plane parallel to the wheel axis of the device according to the invention;
- Figure 1b is a front view of the device of Figure 1a;
- Figure 2 is an exploded view of the device of Figure 1;
- Figures 3a-3c are partial views of an arm of the device;
- Figure 4a is an enlarged view of the fixing means shown in Fig. 1a;
- Figure 4b is a front view of the fixing means;
- Figure 4c is a top view of the ring nut of the fixing means;
- Figure 4d is a section view of the ring nut along the line A-A of Figure 4c.

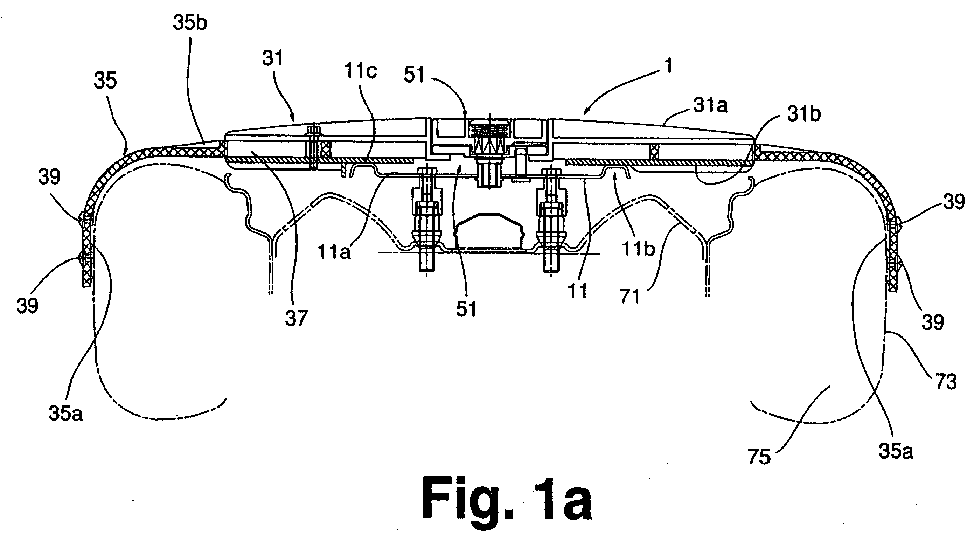

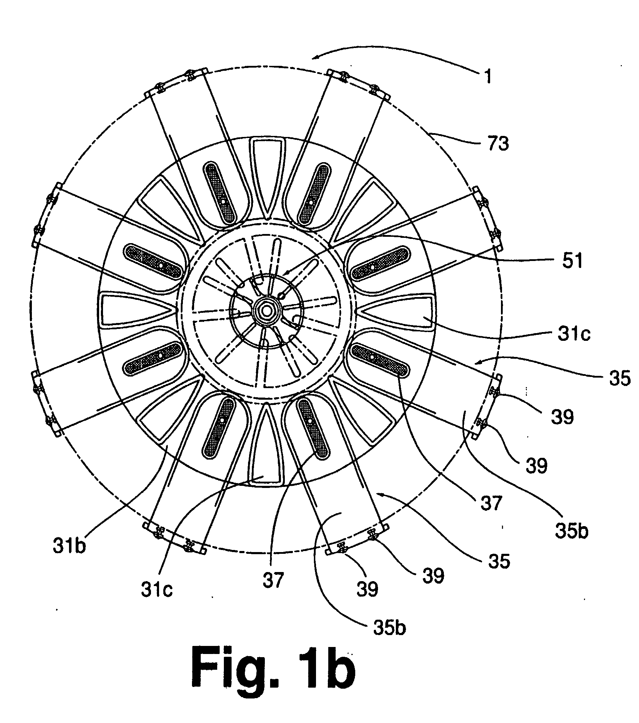

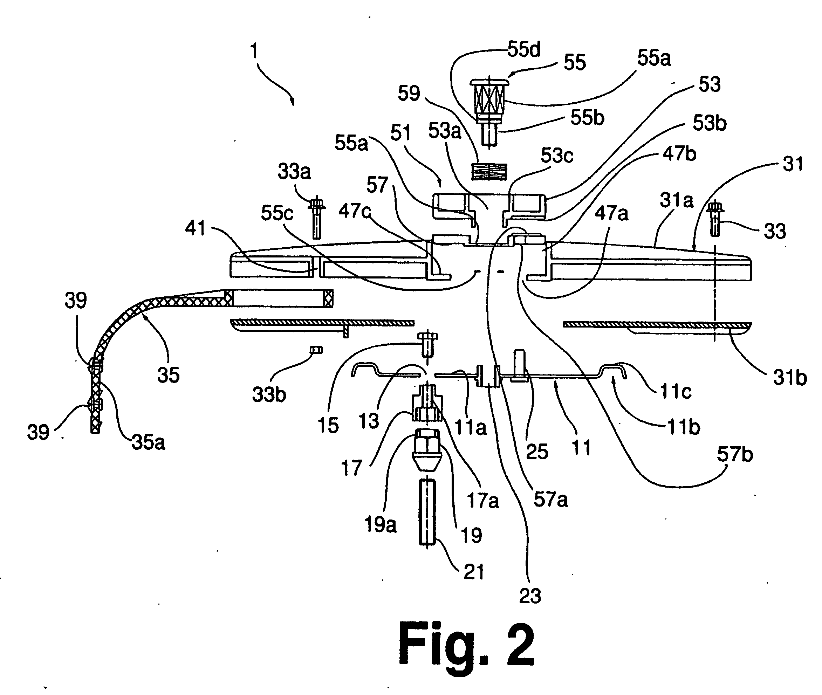

With initial reference to the Figures 1a,1b and 2 is shown an antiskid device 1 comprising a first plate 11, preferably realised in metal, for fixing the device 1 against the rim 71 of the vehicle wheel and a second plate 31, preferably realised in plastic, that can be coupled to said first plate 11 through rapid fixing means 51.

As it can be better seen in Figure 2, the first plate 11 comprises a substantially smooth central portion 11a and a peripheral returned edge 11b for defining a supporting surface 11c for the second plate 31.

The central portion 11a of the plate 11 comprises a series of holes 13 for the passage of bolts 15 engaging in threaded seats 17a internally provided to spacers 17, said spacers being screwed, in turn, on the threaded portion 19a of the hexagon nuts 19 that co-operate with the studs 21 for fixing the rim 71 into the wheel hub of the vehicle.

The holes 13 are preferably realised under form of slots arranged along the spokes of the plate 11 and in such a number and distributed on the central portion 11a in such a way to allow the fixing of the plate 11 against whatever wheel rim in the market.

The second plate 31 results to be subdivided into two shells 31a and 31b held together by bolts 33a passing through holes 41 provided through the shells 31a and 31b and corresponding nuts 33b.

The arms 35, sunburst-arranged and provided with an end 35a folded at approximately 90°, are housed between the shells 31a and 31b.

Besides, some triangular projections 31c, tapered towards the centre of the plate 31, are obtained on the second plate 31. The projections 31c separate the arms 35, allow the orientation of the arms for making the assembly easier and allow their adjustment under the weight of the vehicle during the use.

As it can be seen in Figure 1a, the arms 35 are folded in order to overlap at least on a portion of the tread 73 of the vehicle tire 75 when the device 1 is mounted.

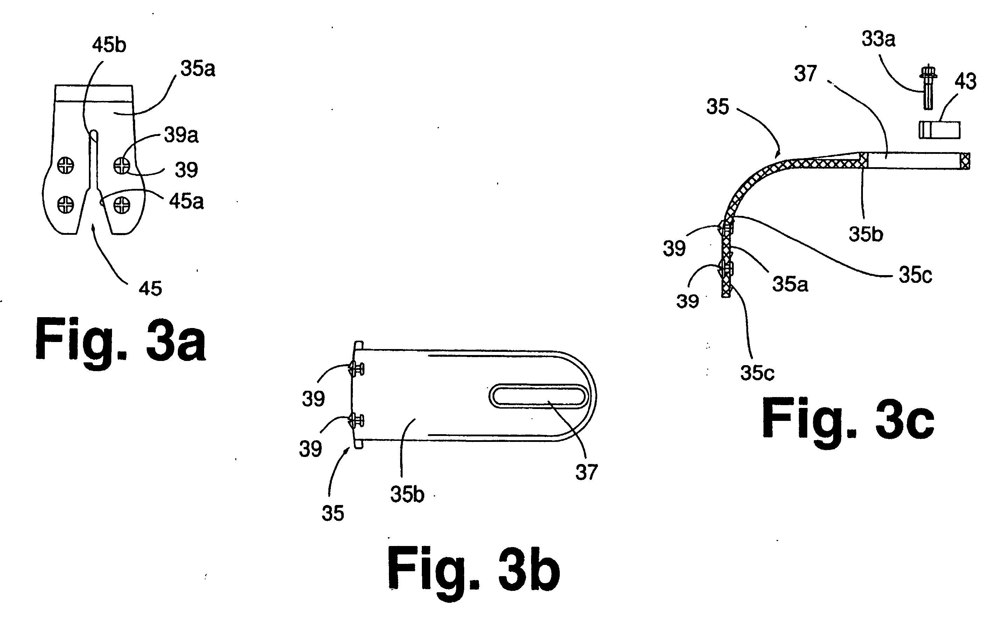

As it can be better seen in Figure 3a, four spikes 39 are provided on the folded end 35a of the arms 35 for increasing the grip of the device with respect to the ground surface covered by the vehicle wheel during the ride.

Besides, the spike heads 39 present a pair of perpendicular grooves 39a defining corresponding cutting edges for increasing the grip, in particular against the iced surfaces.

In addition, the portion 35a is subdivided into two halves by a slit 45 presenting a triangular, outwardly countersunk, more external portion 45a and an internal substantially rectangular portion 45b.

This expedient aims to allow the expansion of the two halves of the portion 35a and to grant a better grip of the device against the ground.

As it can be better seen in Figure 3b, the straight part 35b of the arms 35 presents a slot 37 for the passage of the bolts 33a for allowing the radial adjustment of the arms 35 and the consequent amplitude adjustment of the device 1 for adapting said device 1 to different sizes of tires, although the possibility of angular orientation is kept limited by the projections 31c.

As it can be better seen in Figure 3c, in correspondence of the slots 37 are provided spacers 43 that can be inserted into the slots 37 when necessary for limiting the travel of the arms 35 towards the outside beyond the size of the tire on which the device must be mounted.

In fact, if it is true that it must be possible to move the arms 35 radially for adapting the device 1 to different wheel diameters, it is also true that, once it has been mounted, the device must prevent that the arms 35 move away radially with respect to the tire tread 73, for instance under the effect of the centrifugal force during the rotation of the wheel, because this could provoke the breaking of the arms 35.

To this purpose, the device according to the invention can be advantageously equipped for its commercialisation with some series of spacers 43 of different sizes that the user will mount on the device according to the wheel diameter of his/her own vehicle.

Still with reference to the Figure 3c, the folded ends of the arms 35 are provided with teeth 35c on the side turned towards the tread for increasing the grip against the tire and reducing the relative movements between an arm and the tire during the vehicle ride.

Moreover, coming back again to the Figure 2, the first shell 31a is centrally provided with a circular opening 47a preceded towards the exterior by a circular seat 47b where the rapid fixing means 51 are housed.

With reference to the Figures from 4a to 4d, the fixing means 51 comprise a knob or handwheel 53 provided with a central hexagon hole 53a through which the hexagon stem 55a of a bolt 55 passes so that the bolt 55 rotates together with the knob 53.

The stem 55a of said bolt 55 presents a terminal threaded portion 55b engaging in a threaded bushing 23 centrally welded in the first plate 11 for fixing the second plate 31 against the first plate 11 when the device 1 must be used.

Advantageously, for avoiding that the bolt 55 unscrews out of the hole 23 and that the two parts of the device separate during the use, a ring nut 57 is provided between the knob 53 and the shoulder 47c defined between the opening 47a and the seat 47b, said ring nut 57 being equipped with radial peripherally spaced bosses that interfere with corresponding projections 53b obtained on the lower part of the knob 53 .

Moreover, a helical spring 59 is provided in the knob 53 between the bolt head 55 and the seat 53c for the bolt, and an elastic ring 55c is provided inserted into a circumferential groove 55d of the bolt 55 for holding together the bolt 55, the spring 59, the knob 53 and the ring nut 57.

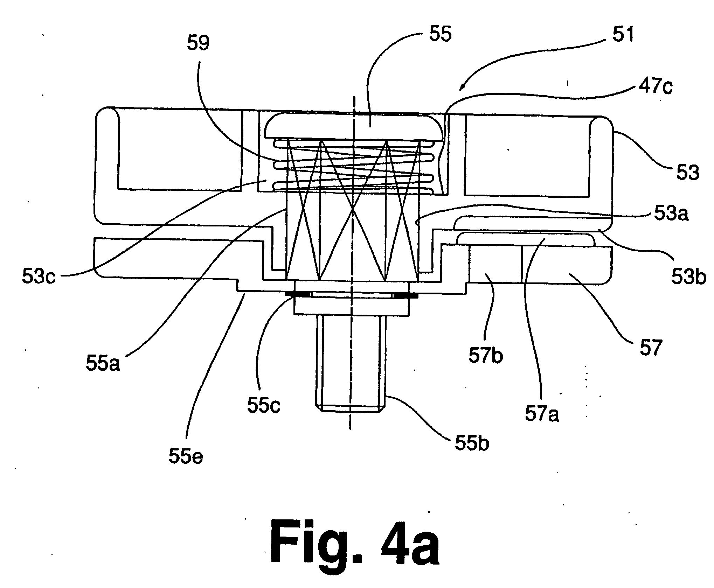

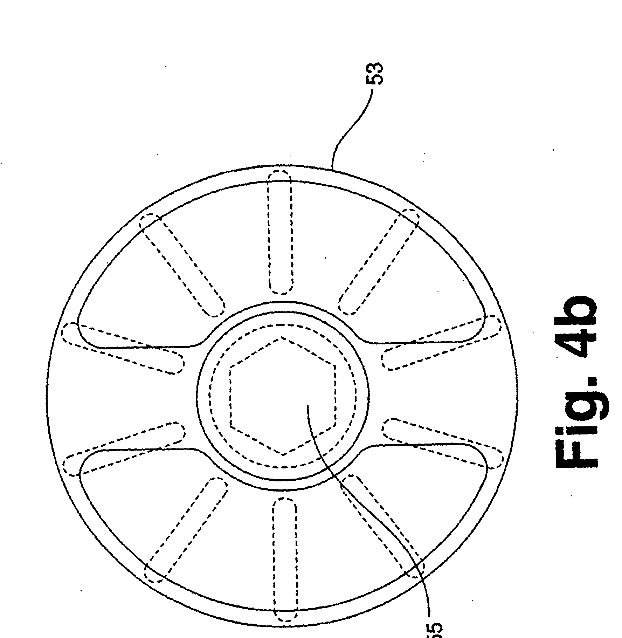

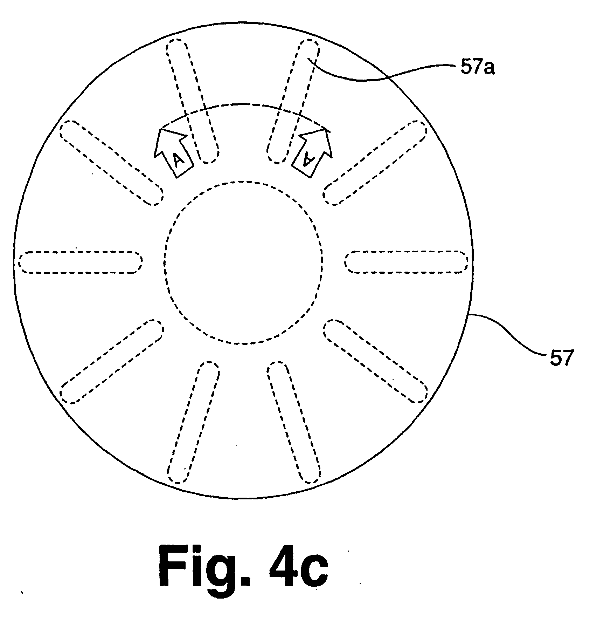

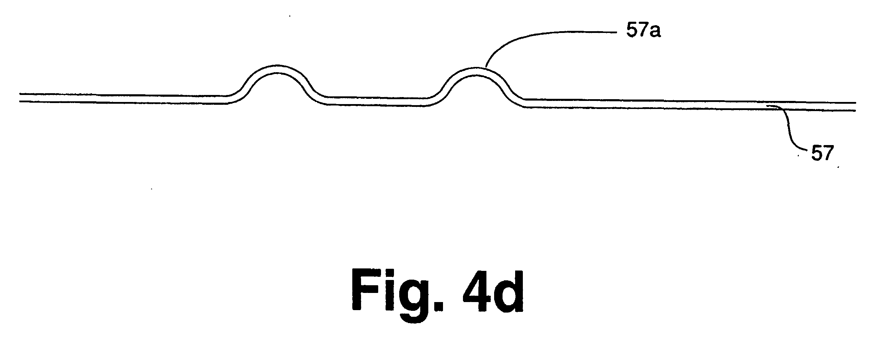

As it can be better seen in Figure 4a, the ring nut 57 presents a lower region that acts as a shoulder for the stem 55a of the bolt 55 when the latter is completely tightened.

Besides, the ring nut 57 is provided with holes 57b in which pins 25 are inserted, said pins extending axially from the surface 11a of the first plate 11 and preventing the rotation of the ring nut 57 with respect to the first plate 11, thereby allowing the engagement between the projections 53b and the bosses 57a when the knob 53 is tightened.

In the following the assembly method of the device according to the invention will be described.

The wheel hub of the vehicle is first arranged for receiving the device 1 by mounting the nuts 19 into the studs 21.

In fact, two types of hubs exist, the first one being provided with studs on which the blocking nuts of the rim are screwed and the second one being provided with threaded holes in which corresponding bolts for blocking the rim are screwed.

According to the type of hub, the nuts 19 can be directly screwed on the studs with which the hub is already equipped, or on the studs equipped with the device, said studs being screwed into the threaded holes provided in the hub.

Then, the first plate 11 can be fixed against the rim of the vehicle wheel by means of the bolts 15 and the spacers 17.

In this way the vehicle is arranged for receiving the second plate 31 of the antiskid device.

Before mounting said second plate 31, it could be necessary to adjust the arms 35, if necessary by adopting the spacers 43, in order to adapt the device to the diameter of the vehicle wheel.

Said second plate 31 is then fixed against the first plate 11 so that the pins 25 enter the holes 57b provided in the ring nut 57.

For fixing the second plate 31 against the first plate 11, the knob 53 is rotated for screwing the bolt 55 into the bushing 23 of the first plate until the second plate 31 is blocked against the first plate 11.

The disassembly operation occurs by executing the operations previously described in the opposite order with the difference that the knob 53 must be slightly taken out for overcoming the resistance of the spring 59 in order to release the projections 53b from the bosses 57a before rotating said knob.

Advantageously, the radial movement of the arms 35 in the device according to the invention seconds the load variations weighing upon the device during the vehicle ride, thereby avoiding the breaking of the arms.

In addition, always thanks to the radial movement of the arms 35, the device according to the invention can be packaged in a package having reduced dimensions, although the possibility of mounting the device onto wheels of whatever size is maintained.

## Claims

1. Antiskid device (1) for vehicle wheels, in particular for increasing the grip of the wheels in case of snow and ice, said device comprising a first plate (11) provided with means for fixing said plate (11) to the rim (71) of the vehicle wheel and a second plate (31) that can be mounted against said first plate (11) by means of rapid fixing means (51) and that embodies a plurality of sunburst-arranged arms (35), said arms being folded at their exterior end (35a) so that they overlap at least partially with the tread (73) of the tire (75) and being provided, in correspondence of said folded end, with means (39) for increasing the grip with respect to the surface met by the wheel during the vehicle ride, **characterised in that** said arms (35) are free to move radially inwardly with respect to said second plate (31) and that means are provided for limiting the travel of said arms radially towards the outside of said second plate (31) thereby allowing that the device (1) adapts itself to the load variations while preventing that said arms (35) move away radially with respect to the tire tread under the effect of the centrifugal force during the rotation of the wheel.

2. Antiskid device (1) according to claim 1, wherein said first plate (11) comprises a substantially smooth central portion (11a) and a peripheral folded edge (11b) for defining a supporting surface (11c) for the second plate (31).

3. Antiskid device (1) according to claim 2, wherein said central portion (11a) of the plate (11) comprises a series of holes (13) for the passage of bolts (15) engaging in threaded seats (17a) intemally provided to spacers (17), said spacers being screwed, in turn, on the hexagon heads (19a) of the nuts (19) that co-operate with the studs (21) for fixing the rim (71) into the wheel hub of the vehicle.

4. Antiskid device (1) according to claim 3, wherein said holes (13) are preferably realised under form of slots arranged along the spokes of the plate (11) or, in any case, being in such a number and being distributed on the central portion (11a) in such a way to allow the fixing of the plate (11) against whatever rim in the market.

5. Antiskid device (1) according to any of the preceding claims, wherein said second plate (31) comprises two shells (31a,31b) held together by bolts (33a) passing through holes (41) provided through the shells (31a,31b) and corresponding nuts (33b), said arms (35) being housed between said shells.

6. Antiskid device (1) according to claim 5, wherein some triangular projections (31c), tapered towards the interior of the plate (31), are moreover obtained on the second plate (31), said projections separating the arms (35), allowing the angular orientation of the arms for making the assembly easier and allowing their adjustment under the weight of the vehicle during the use.

7. Antiskid device (1) according to claim 6, wherein said arms (35) present, in correspondence of their straight portion, a slot (37) for the passage of said bolts (33a) for allowing the radial moving of the arms (35) and the consequent amplitude adjustment of the device (1) for adapting said device to different sizes of tires.

8. Antiskid device (1) according to claim 7, wherein corresponding spacers (43) can be provided in said slots (37) for limiting the travel of the arms (35) towards the outside of the device.

9. Antiskid device (1) according to claim 8, wherein spikes (39) are provided on the folded end (35a) of the arms (35) for increasing the grip of the device with respect to the ground surface covered by the vehicle wheel.

10. Antiskid device (1) according to claim 9, wherein the spike heads (39) further present a pair of perpendicular grooves (39a) defining corresponding cutting edges for increasing the grip, in particular against the iced surfaces.

11. Antiskid device (1) according to claim 10, wherein said folded end (35a) is subdivided into two halves by a slit (45) presenting a triangular, outwardly countersunk, more external portion (45a) and an internal rectangular portion (45b).

12. Antiskid device (1) according to any of the preceding claims, wherein said rapid fixing means (51) comprise a knob (53) to which a bolt (55) is coupled, said bolt engaging with its threaded end in a threaded hole (23) centrally provided in the second plate (31).

13. Antiskid device according to claim 12, wherein a ring nut (57), equipped with radial bosses (57a) that interfere with corresponding radial projections (53b), is provided on the lower part of the knob (53) between the knob (53) and the second plate (31), between the bolt (55) and the knob (53) being further provided a helical spring (59) that keeps into engagement said projections (53b) and said bosses (57a) thereby avoiding that the bolt (55) unscrews out of the hole (23) and that the two parts of the device separate during the use.

14. Antiskid device according to claim 13, wherein an elastic ring (55c) is provided inserted into a circumferential groove (55d) of the bolt (55) for holding together the bolt (55), the spring (59), the knob (53) and the ring nut (57).

15. Antiskid device according to claim 14, wherein said ring nut (57) presents a lowered region that acts as a shoulder for the stem (55a) of the bolt (55) when the latter is completely tightened.

16. Antiskid device according to any of the claims from 12 to 15, wherein said ring nut (57) is further provided with holes (57b) in which pins (25) are inserted, said pins extending axially from the surface (11a) of the first plate (11) and preventing the rotation of the ring nut (57) with respect to the first plate (11).

## Patentansprüche

1. Gleitschutzvorrichtung (1) für Kraftfahrzeugreifen, insbesondere, um die Griffigkeit der Reifen im Falle von Schnee und Eis zu erhöhen, wobei die Vorrichtung eine erste Platte (11), die mit Mitteln ausgestattet ist, um die Platte (11) an der Felge (71) des Kraftfahrzeugreifens zu befestigen, und eine zweite Platte (31) umfasst, welche an der ersten Platte (11) mittels Schnellverschlussmitteln (51) befestigt werden kann und welche eine Vielzahl von sonnenstrahlenförmig angeordneten Armen (35) enthält, die an ihrem äußeren Ende (35a) gefaltet sind, sodass sie zumindest teilweise mit der Lauffläche (73) des Reifens (75) überlappen, und in Übereinstimmung mit dem gefalteten Ende mit Mitteln (39) ausgestattet sind, um die Griffigkeit bezüglich der Oberfläche zu erhöhen, welche vom Reifen während der Fahrt des Kraftfahrzeugs berührt wird, **dadurch gekennzeichnet, dass** sich die Arme (35) radial nach innen bezüglich der zweiten Platte (31) bewegen können, und dass Mittel vorgesehen sind, um den Hub der Arme radial in Richtung auf das Äußere der zweiten Platte (31) zu begrenzen und dabei zu erlauben, dass sich die Vorrichtung (1) selbst an Laständerungen anpasst, während sie verhindern, dass sich die Arme (35) radial bezüglich der Lauffläche des Reifens unter dem Einfluss der Zentrifugalkraft während der Rotation des Reifens wegbewegen.

2. Gleitschutzvorrichtung (1) gemäß Anspruch 1, wobei die erste Platte (11) einen im Wesentlichen glatten zentralen Bereich (11a) und eine am Umfang gefaltete Kante (11b) aufweist, um eine Stützoberfläche (11c) für die zweite Platte (31) zu definieren.

3. Gleitschutzvorrichtung (1) gemäß Anspruch 2, wobei der zentrale Bereich (11a) der Platte (11) eine Reihe von Löchern (13) für den Durchgang von Bolzen (15) umfasst, die in Gewinde-Auflagen (17a) eingreifen, welche innen mit Abstandshaltern (17) ausgestattet sind, wobei die Abstandshalter ihrerseits auf die sechseckigen Köpfe (19a) der Nuten (19) geschraubt sind, welche mit den Ansatzbolzen (21) zusammenwirken, um die Felge (71) an der Radnabe des Kraftfahrzeugs zu befestigen.

4. Gleitschutzvorrichtung (1) gemäß Anspruch 3, wobei die Löcher (13) vorzugsweise in der Form von Schlitzen verwirklicht sind, welche entlang der Speichen der Platte (11) angeordnet sind oder jedenfalls in solch einer Zahl sind und auf dem zentralen Teil (11a) in solch einer Art und Weise verteilt sind, um das Befestigen der Platte (11) an irgendeiner marktüblichen Felge zu erlauben.

5. Gleitschutzvorrichtung (1) gemäß einem der vorhergehenden Ansprüche, wobei die zweite Platte (31) zwei Ummantelungen (31a, 31b) umfasst, die von Bolzen (33a) zusammengehalten werden, welche durch Löcher (41) durchgehen, die in den Ummantelungen (31a, 31b) und den entsprechenden Nuten (33b) vorgesehen sind, wobei die Arme (35) zwischen den Ummantelungen aufgenommen sind.

6. Gleitschutzvorrichtung (1) gemäß Anspruch 5, wobei einige dreieckige Vorsprünge (31c), welche sich in Richtung auf das Innere der Platte (31) verjüngen, zudem auf der zweiten Platte (31) erhalten sind, wobei die Vorsprünge die Arme (35) voneinander trennen, was die Winkelausrichtung der Arme erlaubt, um den Zusammenbau einfacher zu machen und ihre Anpassung unter dem Gewicht des Kraftfahrzeugs während der Benutzung zu erlauben.

7. Gleitschutzvorrichtung (1) gemäß Anspruch 6, wobei die Arme (35) in Übereinstimmung mit ihrem geraden Teil einen Schlitz (37) für den Durchgang der Bolzen (33a) aufweisen, um die radiale Bewegung der Arme (35) und die folgende Amplitudenanpassung der Vorrichtung (1) zu erlauben, um die Vorrichtung an verschiedene Reifengrößen anzupassen.

8. Gleitschutzvorrichtung (1) gemäß Anspruch 7, wobei entsprechende Abstandshalter (43) in den Schlitzen (37) vorgesehen sein können, um den Hub der Arme (35) in Richtung auf das Äußere der Vorrichtung zu begrenzen.

9. Gleitschutzvorrichtung (1) gemäß Anspruch 8, wobei Stifte (39) auf dem gefalteten Ende (35a) der Arme (35) vorgesehen sind, um die Griffigkeit der Vorrichtung in Bezug auf die vom Reifen des Kraftfahrzeugs bedeckte Bodenoberfläche zu vergrößern.

10. Gleitschutzvorrichtung (1) gemäß Anspruch 9, wobei die Stiftköpfe (39) zudem ein Paar rechtwinkliger Nuten (39a) aufweisen, welche entsprechende Schnittkanten definieren, um die Griffigkeit zu vergrößern, insbesondere auf vereisten Oberflächen.

11. Gleitschutzvorrichtung (1) gemäß Anspruch 10, wobei das gefaltete Ende (35a) von einem Schlitz (45) in zwei Hälften unterteilt wird, welche einen dreieckigen, nach Außen gesenkten äußeren Teil (45a) und einen inneren rechtwinkligen Teil (45b) aufweisen.

12. Gleitschutzvorrichtung (1) gemäß einem der vorhergehenden Ansprüche, wobei die Schnellverschlussmittel (51) einen Knauf (53) umfassen, an welchen ein Bolzen (55) gekoppelt ist, wobei der Bolzen mit seinem Gewindeende in ein Gewindeloch (23) eingreift, welches zentral in der zweiten Platte (31) vorgesehen ist.

13. Gleitschutzvorrichtung (1) gemäß Anspruch 12, wobei eine Ringmutter (57), die mit radialen Ansätzen (57a) ausgestattet ist, welche mit entsprechenden radialen Vorsprüngen (53b) wechselwirken, auf dem unteren Teil des Knaufs (53) zwischen dem Knauf (53) und der zweiten Platte (31) vorgesehen ist, wobei zwischen dem Bolzen (55) und dem Knauf (53) zudem eine helikale Feder (59) vorgesehen ist, welche die Vorsprünge (53b) und die Ansätze (57a) im Eingriff hält und dabei vermeidet, dass sich der Bolzen (55) aus dem Loch (23) herausschraubt und dass sich die beiden Teile der Vorrichtung während der Benutzung voneinander trennen.

14. Gleitschutzvorrichtung gemäß Anspruch 13, wobei ein elastischer Ring (55c) vorgesehen ist, der in eine Umfangsnut (55d) des Bolzens (55) eingesetzt ist, um den Bolzen (55), die Feder (59), den Knauf (53) und die Ringmutter (57) zusammen zu halten.

15. Gleitschutzvorrichtung gemäß Anspruch 14, wobei die Ringmutter (57) einen abgesenkten Bereich aufweist, der als eine Schulter für den Stamm (55a) des Bolzens (55) dient, wenn der letztere vollständig festgezogen ist.

16. Gleitschutzvorrichtung gemäß einem der Ansprüche 12 bis 15, wobei die Ringmutter (57) zudem mit Löchern (57b) ausgestattet ist, in welche Stifte (25) eingesetzt sind, wobei sich die Stifte axial von der Oberfläche (11a) der ersten Platte (11) erstrecken und die Drehung der Ringmutter (57) bezüglich der ersten Platte (11) verhindern.

## Revendications

1. Dispositif antidérapant (1) pour des roues de véhicules, destiné, en particulier, à augmenter l'adhérence des roues en cas de neige ou de verglas, ledit dispositif comprenant une première plaque (11) dotée de moyens pour fixer ladite plaque (11) à la jante (71) de la roue de véhicule et une seconde plaque (31) qui peut être montée contre ladite première plaque (11) par l'intermédiaire de moyens de fixation rapide (51) et qui réalise une pluralité de bras agencés suivant une configuration en rayons de soleil (35), lesdits bras étant repliés au niveau de leur extrémité extérieure (35a) de façon qu'ils recouvrent, au moins partiellement, la bande de roulement (73) du pneu (75) et étant pourvus, en correspondance avec ladite extrémité repliée, de moyens (39) destinés à accroître l'adhérence par rapport à la surface rencontrée par la roue pendant la course du véhicule, **caractérisé en ce que** lesdits bras (35) sont libres de se déplacer radialement vers l'intérieur par rapport à ladite seconde plaque (31) et **en ce que** des moyens sont fournis pour limiter le déplacement desdits bras radialement vers l'extérieur de ladite seconde plaque (31) de façon à permettre que le dispositif (1) s'adapte de lui-même aux variations de charge tout en empêchant lesdits bras (35) de s'écarter radialement par rapport à la bande de roulement du pneu sous l'effet de la force centrifuge pendant la rotation de la roue.

2. Dispositif antidérapant (1) selon la revendication 1, dans lequel ladite première plaque (11) comprend une partie centrale essentiellement uniforme (11a) et un bord périphérique replié (11b) pour définir une surface de support (11c) pour la seconde plaque (31).

3. Dispositif antidérapant (1) selon la revendication 2, dans lequel ladite partie centrale (11a) de la plaque (11) comprend une série de trous (13) pour le passage de boulons (15) s'engageant dans les embases taraudées (17a) prévues à l'intérieur des écarteurs (17), lesdits écarteurs étant vissés, à leur tour, sur les têtes hexagonales (19a) des écrous (19) qui coopèrent avec les goujons filetés (21) pour fixer la jante (71) dans le moyeu de roue du véhicule.

4. Dispositif antidérapant (1) selon la revendication 3, dans lequel lesdits trous (13) sont de préférence réalisés sous forme de fentes disposées le long des rayons de la plaque (11) ou, dans tous les cas, se trouvant en nombre tel et distribués sur la partie centrale (11a) d'une façon à permettre la fixation de la plaque (11) contre une jante quelconque du marché.

5. Dispositif antidérapant (1) selon l'une quelconque des revendications précédentes, dans lequel ladite seconde plaque (31) comporte deux coques (31a, 31b) maintenues ensemble par des boulons (33a) passant à travers des trous (41) prévus à travers les enveloppes (31a, 31b) et des écrous correspondants (33b), lesdits bras (35) étant logés entre lesdites enveloppes.

6. Dispositif antidérapant (1) selon la revendication 5, dans lequel quelques parties en saillie triangulaires (31c) effilées vers l'intérieur de la plaque (31), sont obtenues, en outre, sur la seconde plaque (31), lesdites parties en saillie séparant les bras (35), permettant l'orientation angulaire des bras pour rendre l'assemblage plus facile et leur permettant de s'ajuster sous le poids du véhicule pendant l'utilisation.

7. Dispositif antidérapant (1) selon la revendication 6, dans lequel lesdits bras (35) présentent, en correspondance avec leur partie rectiligne, une fente (37) destinée au passage desdits boulons (33a) pour permettre le déplacement radial des bras (35) et l'ajustement d'amplitude en résultant du dispositif (1) pour adapter ledit dispositif aux différentes dimensions des pneus.

8. Dispositif antidérapant (1) selon la revendication 7, dans lequel des écarteurs correspondants (43) peuvent être fournis dans lesdites fentes (37) pour limiter le déplacement des bras (35) vers l'extérieur du dispositif.

9. Dispositif antidérapant (1) selon la revendication 8, dans lequel des crampons (39) sont prévus sur l'extrémité repliée (35a) des bras (35) pour augmenter l'adhérence du dispositif par rapport à la surface du sol couverte par la roue de véhicule.

10. Dispositif antidérapant (1) selon la revendication 9, dans lequel les têtes de crampons (39) présentent, de plus, une paire de rainures perpendiculaires (39a) définissant des bords de coupe correspondants pour augmenter l'adhérence, en particulier, contre les surfaces glacées.

11. Dispositif antidérapant (1) selon la revendication 10, dans lequel ladite extrémité repliée (35a) est subdivisée en deux moitiés par une fente (45) présentant une partie triangulaire plus externe, fraisée vers l'extérieur (45a) et une partie rectangulaire interne (45b).

12. Dispositif antidérapant (1) selon l'une quelconque des revendications précédentes, dans lequel lesdits moyens de fixation rapide (51) comprennent un bouton (53) auquel un boulon (55) est couplé, ledit boulon s'engageant avec son extrémité filetée dans un trou taraudé (23) prévu au centre de la seconde plaque (31).

13. Dispositif antidérapant selon la revendication 12, dans lequel un écrou à anneau (57), doté de bossages radiaux (57a) qui interfèrent avec des parties radiales en saillie correspondantes (53b), est prévu sur la partie inférieure du bouton (53) entre le bouton (53) et la seconde plaque (31) étant, de plus, doté, entre le boulon (55) et le bouton (53), d'un ressort à boudin (59) qui maintient en engagement lesdites parties en saillie (53b) et lesdits bossages (57a) de façon à éviter que le boulon (55) ne se dévisse hors du trou (23) et que les deux parties du dispositif ne se séparent en fonctionnement.

14. Dispositif antidérapant selon la revendication 13, dans lequel une bague élastique (55c) est fournie, insérée dans une gorge périphérique (55d) du boulon (55) pour maintenir ensemble le boulon (55), le ressort (59), le bouton (53) et l'écrou à anneau (57).

15. Dispositif antidérapant selon la revendication 14, dans lequel ledit écrou à anneau (57) présente une zone abaissée qui agit comme un épaulement pour la tige (55a) du boulon (55) lorsque celui-ci est complètement serré.

16. Dispositif antidérapant selon l'une quelconque des revendications 12 à 15, dans lequel ledit écrou à anneau (57) est, de plus, doté de trous (57b) dans lesquels des broches (25) sont insérées, lesdites broches s'étendant axialement à partir de la surface (11a) de la première plaque (11) et empêchant la rotation de l'écrou à anneau (57) par rapport à la première plaque (11).
